# EUROPEAN PATENT APPLICATION

(11) **EP 1 418 118 A1**
(43) Date of publication of application: **12.05.2004**
(21) Application number: 01953760.4
(22) Date of filing: 19.06.2001
(51) Int. Cl.: B62J 6/00

(54) **A LIGHT EMITTING DEVICE FOR CAUTION**

(71) Applicant: Hung, Paochuan, Sanchung City, Taipei Hsien (CN)
(72) Inventor: Hung, Paochuan, Sanchung City, Taipei Hsien (CN)
(74) Representative: Viering, Jentschura & Partner
(86) International application number: PCT/CN2001/001027
(87) International publication number: WO 2002/102650

(57) **Abstract**

A lighting structure of an alarm lamp used to a wheel; the lighting structure having a body (1) and a light guide element (2); one end of the body (1) being installed with the light guide element (2); a light emitting element (3) being installed in the light guide element (2); a first pin(31) of light emitting element(3) being inserted into the body (1); and a battery (13) being installed in the light guide element (2); an upper end of the battery (13) being spaced to the first pin(31); an upper spring (12) being installed between the upper end of the battery (13) and an upper end of the body (1); one end of the body (1) has a lower cover (15); a conductive sheet(14) is installed between the lower cover and a lower end of the battery; a lower spring (141) being in contact to the battery (2); and a negative electrode of the battery being electrically connected to a second pin(33) of the light emitting element (3).

## Description

### FIELD OF THE INVENTION

The present invention relates to vehicle elements, and particular to a lighting structure of an alarm lamp used to a wheel; wherein the lighting structure has a body. A battery is installed within the body. One end of the body is installed with a light guide element. A light emitting element is installed in the light guide element. An eccentric force from rotation of the wheel will cause the battery to supply power to the light emitting element; so that the light emitting element lights up. The light guide element guides light from the light emitting element so as to have a safety alarm effect.

### BACKGROUND OF THE INVENTION

In prior art, almost no wheel is added with lighting structure as an alarm device. In the prior art wheel, only some light reflecting sheets are added thereon. However, the reflecting sheets need to be radiated by light, otherwise, they can not work.

### SUMMARY OF THE INVENTION

Accordingly, the primary object of the present invention is to provide a lighting structure of an alarm lamp, an eccentric force from rotation of the wheel will cause the battery to supply power to the light emitting element; so that the light emitting element lights up; the light guide element guides light from the light emitting element so as to have a safety alarm effect.

Another object of the present invention is to provide a lighting structure of an alarm lamp, wherein a peripheral surface of the light guide element is formed with a plurality of concave recesses or a plurality of haired surfaces, or convex rings or via holes to have an effect of multi-light sources. Thereby, when the wheel rotates, the whole surface of the wheel is bright so as to assure the safety in driving.

A further object of the present invention is to provide a lighting structure of an alarm lamp, wherein a light sensing element on the light sensing circuit senses light. When light intensity achieves a predetermined value, the light emitting element 3 extinguishes for saving power.

A still object of the present invention is to provide a lighting structure of an alarm lamp, wherein the lighting structure of an alarm lamp can be installed to a wheel steadily and conveniently.

To achieve above objects, the present invention provides a lighting structure of an alarm lamp used to a wheel; wherein the lighting structure has a body. A battery is installed within the body. One end of the body is installed with a light guide element. A light emitting element is installed in the light guide element. An eccentric force from rotation of the wheel will cause the battery to supply power to the light emitting element; so that the light emitting element lights up. The light guide element guides light from the light emitting element so as to have a safety alarm effect.

The various objects and advantages of the present invention will be more readily understood from the following detailed description when read in conjunction with the appended drawing.

### BRIEF DESCRIPTION OF THE DRAWINGS

Fig. 1 is an exploded perspective view of the present invention.
Fig. 2 is an assembled front view of the present invention.
Fig. 3 is an assembled lateral view of the present invention.
Fig. 4 is an assembled cross section view of the present invention.
Fig. 5 is an assembled schematic view of the present invention.
Fig. 6 is another assembled schematic view of the present invention.
Fig. 7 is a front view showing that the hook does not hook to a steel wire head.
Fig. 8 is a front view showing that the hook hooks to the steel wire head.
Fig. 9 is a lateral view showing that the hook does not hook to a steel wire head.
Fig. 10 is a lateral view showing that the hook does hooks to a steel wire head.
Fig. 11 is a perspective view showing that the present invention is assembled to a wheel.
Fig. 12 is a schematic cross view showing the conduction condition of the present invention.
Fig. 13 shows the circuit of the present invention.
Fig. 14 shows one embodiment of the present invention, where the light guide element has concave recesses.
Fig. 15 shows one embodiment of the present invention, where the light guide element has haired surfaces.
Fig. 16 shows one embodiment of the present invention, where the light guide element has convex protrusions.
Fig. 17 shows one embodiment of the present invention, where the light guide element has via holes.

### DETAILED DESCRIPTION OF THE INVENTION

In order that those skilled in the art can further understand the present invention, a description will be described in the following in details. However, these descriptions and the appended drawings are only used to cause those skilled in the art to understand the objects, features, and characteristics of the present invention, but not to be used to confine the scope and spirit of the present invention defined in the appended claims.

### PREFERRED EMBODIMENT

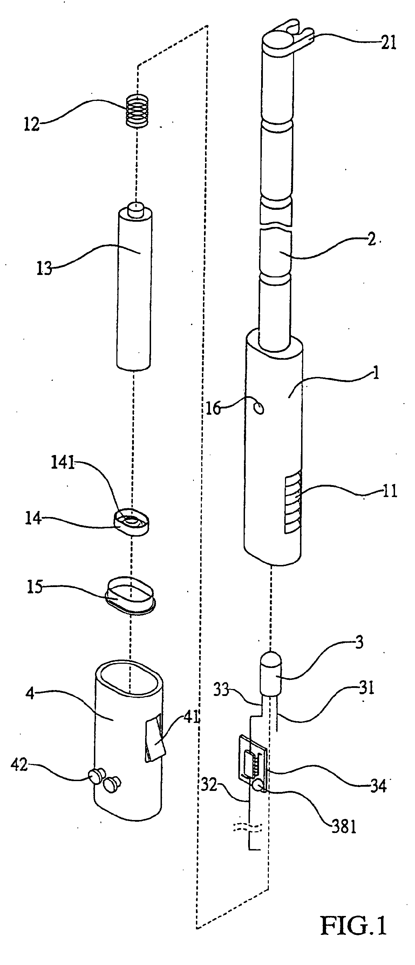

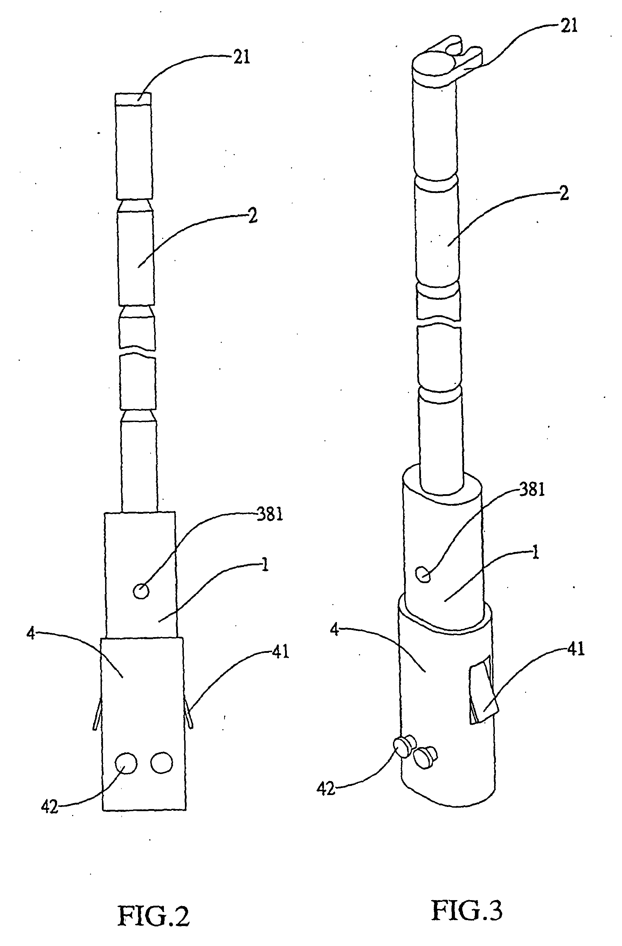

With reference to Figs. 1 to 4, the lighting structure of an alarm lamp of the present invention is illustrated. The lighting structure of an alarm lamp has the following elements. A body 1 is a hollow structure. Each of two sides of the body is formed with a saw tooth-like stop 11. A top of the body 1 is installed with a light guide element 2. A front end of the light guide element 2 is installed with a hook 21. A light emitting element 3 is embedded into the light guide element 2. One pin 31 of the light emitting element 3 is protruded form the body 1. A top of the body 1 is installed with a spring 12. A length of the spring 12 is larger than a pin 31 of a light emitting element 3. A battery 13 is placed in the body 1 so that the body 1 resists against the spring 12. A bottom end of the body 1 is coupled with a lower cover 15. A conductive sheet 14 is received in the lower cover 15. The size of the conductive sheet 14 is smaller than that of the lower cover 15. A spring 141 is retained in the conductive sheet 14. The spring 141 is connected to a negative electrode of the battery 13. A circuit control device 34 is installed on the body 1. The circuit control device 34 has a soft conductive wire 32 which serves to connect another pin 33 of the light emitting element 3 and the conductive sheet 14. A light sensing element 381 is installed on the circuit control device 34. The light sensing element 381 protrudes from a via hole 16 in the body 1. A sleeve 4 has two sides. Each side is installed with a movable stop sheet 41. Thereby, the stop 11 of the body 1 and in the sleeve 4 resists against the stop sheet 41 and is retained therein. Two retaining nails 42 are installed on the sleeve 4.

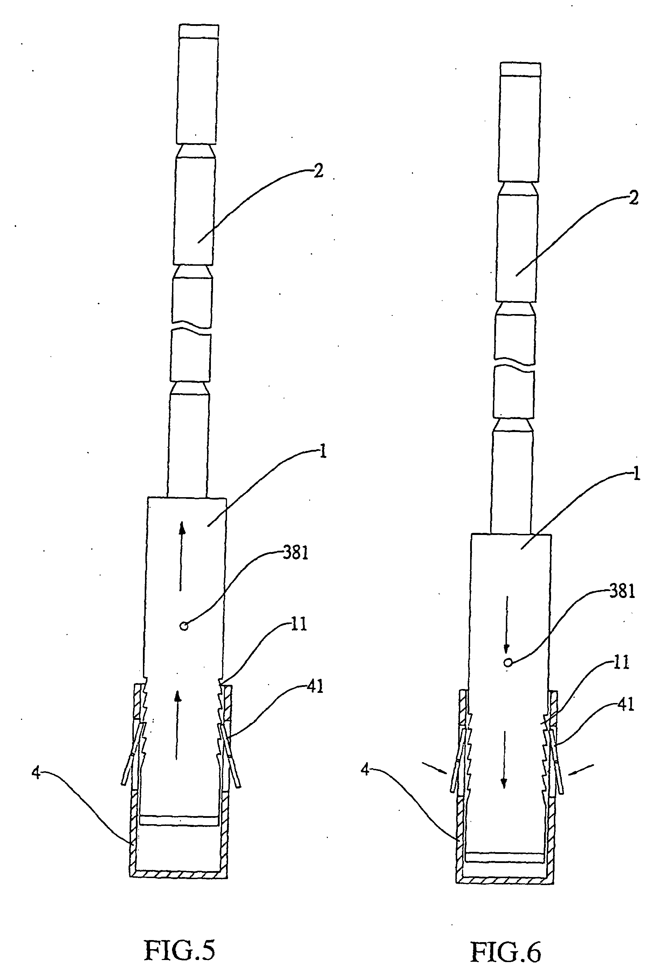

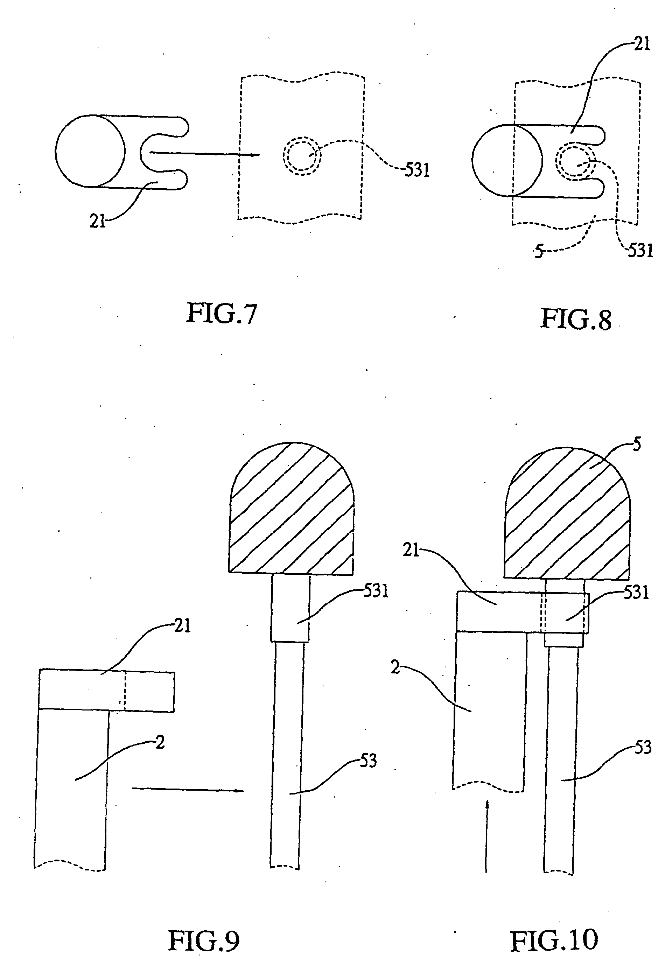

Referring to Figs. 5 to 11, the lighting structure of an alarm lamp of the present invention is assembled to the wheel. In assembly, the two retaining nails 42 are hooked to two steel wires 51, 52 at one lateral side of a wheel. Then the stop sheet 41 is pressed and the light guide element 2 is driven to move downwards to reduce the length between the body 1 and the light guide element 2 out of the sleeve 4. The hook 21 on the light guide element 2 is hooked to a steel wire 53 at another lateral side of the wheel. The hook 21 is moveable easily along the steel wire 53. Then the hook 21 is fixed to a steel wire head 531 the diameter of which is the approximately equal to that of an inner diameter of the hook 21. The hook 21 resists against a lower side of a steel ring 5. An angle between the stop sheet 41 of the sleeve 4 and the stop 11 of the body 1 is specific so that it is necessary to press the stop sheet 41, of the stop 11 only at the state of reducing the length of the light guide element 2 and the body 1. When it is desired to increase the length of the light guide element 2 and the body 1, it is only necessary to pull the light guide element 2 upwards. Thereby, the assembly and detach of the present invention to the wheel is easy and convenient.

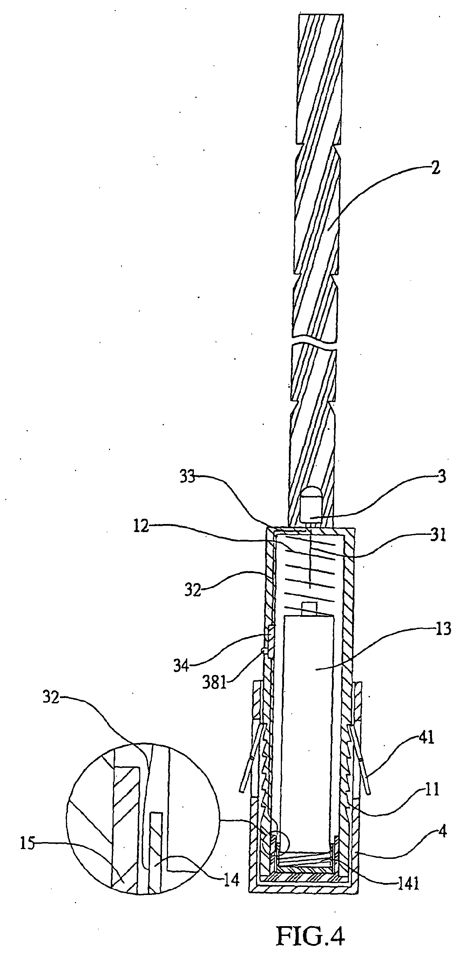

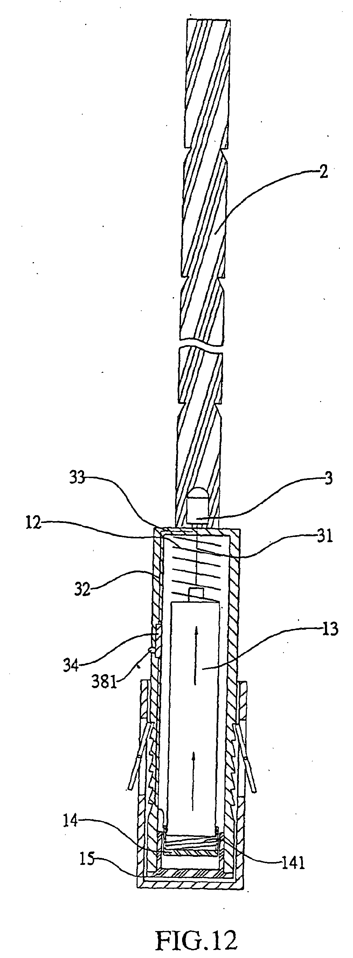

Referring to Figs. 4, 11 and 12, in the present invention, the elastic force of the spring 112 is slightly larger than that of the spring 141, and is sufficient to resist against the battery 13 at the lower side. When the wheel does not rotate, an eccentric force generates so that the battery swings, the eccentric force of the battery will larger than the elastic force of the spring 12. Thus, the battery 13 will compress the spring 12, so that a positive of the battery 13 will contact the pin 3 of the light emitting element 3. Since the size of the conductive sheet 14 is smaller than that of the lower cover 15 and the soft conductive wire 32 is welded to the conductive sheet 14. The conductive wire 32 of the conductive sheet 14 will swing forwards with the battery 13 so as to retain the spring 141 of the conductive sheet 14 is in contact with the negative electrode of the battery 13. Thereby, the whole system is conductive, and thus, the light emitting element 3 is driven to light up to present a safety alarm effect.

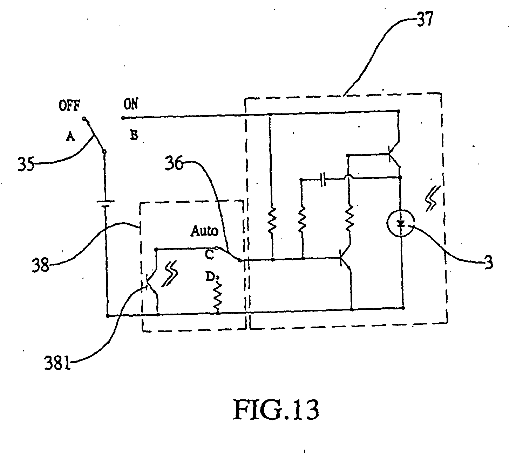

With reference to Fig. 13, the circuit diagram of the present invention is illustrated. The circuit control device 34 includes an oscillating circuit 37 and a light sensing circuit 38. The arrows 35 and 36 illustrate the directions of current flows. When the wheel rotates, the arrow 35 points to point A from point B so that a conductive loop is formed and the light emitting element 3 lights up. The oscillating circuit 37 will cause the light emitting element 3 to flash. The light sensing element 381 on the light sensing circuit 38 sense light. When light intensity achieves a predetermined value, the arrow 36 will point to D point from C point so that the loop is interrupted and thus the light emitting element 3 extinguishes for saving power. When light is too weak, the arrow 36 will point to C point from D point so that the loop conducts and the light emitting element 3 lights up. In above, the light sensing element 381 may be a photoelectric transistor (in this embodiment) or a light sensitive resistor (not shown). Thereby, the circuit control device 34 may only include the oscillating circuit 37 without the light sensing circuit 38.

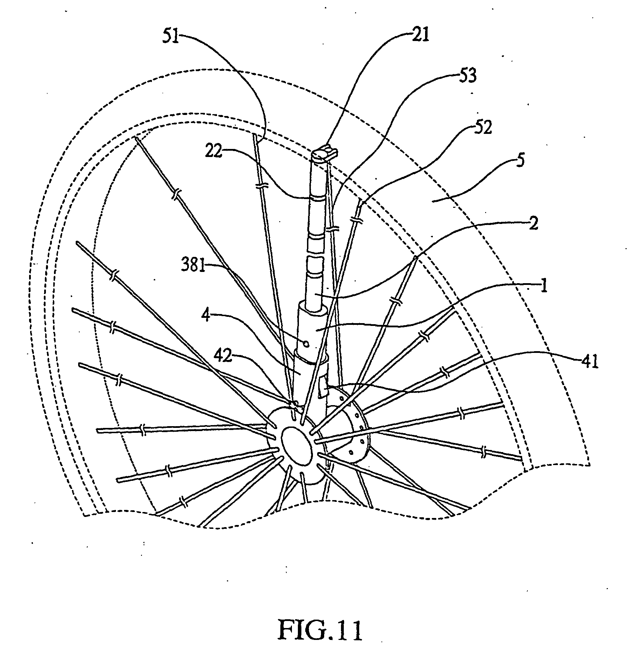

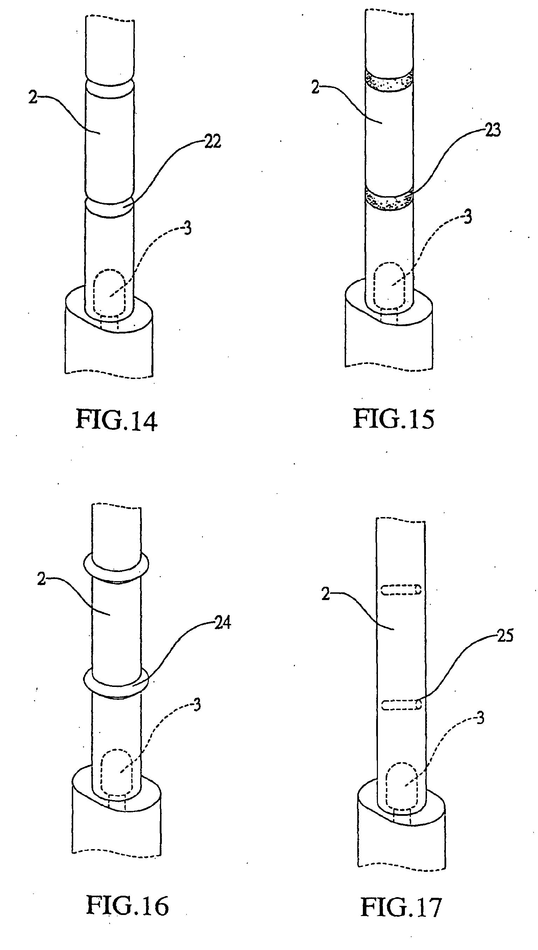

With reference to Figs. 11, 14 and 17, a peripheral surface of the light guide element 2 is formed with a plurality of concave recesses 22 or a plurality of haired surfaces 23, or convex rings 24 or via holes 25 for reflecting or deflecting light between two mediums of different reflecting or deflecting indices. Thereby, the light emitting element 3 with single one light source can have an effect of multi-light sources. Thereby, when the wheel rotates, the whole surface of the wheel are bright so as to assure the safety in driving.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A lighting structure of an alarm lamp used to a wheel; the lighting structure having a body (1) and a light guide element (2); one end of the body (1) being installed with the light guide element (2); a light emitting element (3) being installed in the light guide element (2); a first pin(31) of light emitting element being inserted into the body (1); and a battery (13) being installed in the light guide element (2); an upper end of the battery (13) being spaced to the first pin(31); an upper spring (12) being installed between the upper end of the battery (13) and an upper end of the body (1); one end of the body (1) has a lower cover (15); a conductive sheet(14) is installed between the lower cover and a lower end of the battery; a lower spring (141) being in contact to the battery (2); and a negative electrode of the battery being electrically connected to a second pin(33) of the light emitting element (3).

2. The lighting structure of an alarm lamp as claimed in claim 1, wherein a circuit control device (34) is connected between the negative electrode of the battery (13) and a second pin of a light emitting element (2).

3. The lighting structure of an alarm lamp as claimed in claim 2, wherein the circuit control device (34) is an oscillating circuit (37).

4. The lighting structure of an alarm lamp as claimed in claim 2, wherein the circuit control device (34) includes a light sensing circuit (38) and an oscillating circuit (37).

5. The lighting structure of an alarm lamp as claimed in claim 4, wherein the light sensing circuit (38) has a light sensing element (381).

6. The lighting structure of an alarm lamp as claimed in claim 5, wherein the light sensing element(381) is a photoelectric transistor.

7. The lighting structure of an alarm lamp as claimed in claim 5, wherein the light emitting element (381) is a light sensitive resistor.

8. The lighting structure of an alarm lamp as claimed in claim 1, wherein a periphery of the light guide element (2) is formed with one of a plurality of concave recesses (22), a plurality of haired surfaces (23), a plurality of convex rings (24), and a plurality of via holes (25).

9. The lighting structure of an alarm lamp as claimed in claim 1, wherein a front end of the light guide element (2) is formed with a hook which is installed at a steel wire head of a wheel; one end of the body (1) is installed to a sleeve (4); each side of the sleeve (4) is installed with a movable stop sheet(41) for resisting against the stop of the body ; two retaining nails (42) are installed on the sleeve (4); the retaining nails (42) are hooked to a steel wire of the wheel.

10. The lighting structure of an alarm lamp as claimed in claim 9, wherein the stop (11) of the body has a saw teeth like cross section.
